# EUROPEAN PATENT SPECIFICATION

(11) **EP 1 394 986 B1**
(45) Date of publication and mention of the grant of the patent: **09.11.2005**
(21) Application number: 02019193.8
(22) Date of filing: 02.09.2002
(51) Int. Cl.: H04L 12/28, H04L 29/06

(54) **Service gateway for controlling audio/video devices in a local network**
Netzanpassungsgerät zur Steuerung von Audio/Video-Geräten in einem lokalen Netz
Passerelle de service pour le contrôle d'appareils audiovisuels dans un réseau local

(43) Date of publication of application: 03.03.2004
(73) Proprietor: Sony Deutschland GmbH, 50829 Köln (DE)
(72) Inventor: Szucs, Paul, Advanced Techn. Center Stuttgart, 70327 Stuttgart (DE); Tiedemann, Stephen Advanced Techn.Center Stuttgart, 70327 Stuttgart (DE); Mayer, Matthias, Advanced Techn. Center Stuttgart, 70327 Stuttgart (DE); Terranova, Sabine, Advanced Techn.Center Stuttgart, 70327 Stuttgart (DE); Clanget, Ulrich, Advanced Techn. Center Stuttgart, 70327 Stuttgart (DE)
(74) Representative: Müller - Hoffmann & Partner

(56) References cited:
- WO-A-01/91434
- WO-A-02/05118
- US-A1- 2001 032 273
- GRAN C ET AL: "From proven office technologies to the intelligent multimedia home" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 July 2000 (2000-07-30), pages 1225-1228, XP010512727 ISBN: 0-7803-6536-4
- JORDAN D: "JAVA IN THE HOME: OSGI RESIDENTIAL GATEWAYS" JAVA REPORT, SIGS PUBLICATIONS, NEW YORK, NY, US, vol. 5, no. 9, September 2000 (2000-09), page 38,39-42,104 XP000998638 ISSN: 1086-4660
- CONDRY, M.; GALL, U.; DELISLE, P.: "Open Service Gateway Architecture Overview" IECON '99 PROCEEDINGS, vol. 2, 1999, pages 735-742, XP001121625
- GONG LI: "A Software Architecture for Open Service Gateways" IEEE INTERNET COMPUTING, vol. 5, no. 1, February 2001 (2001-02), page 64-70 XP002225167

## Description

The present invention relates to an AV bundle for a service gateway framework, to a service gateway framework, particularly to a service gateway framework according to the OSGi (Open Services Gateway Initiative) standard, and to a method for controlling devices of a local device network, whereby said local device network is connected to a service gateway framework.

The current vision of a Home Network is a network comprised of AV devices like TVs, tuners, VCRs, and of IT devices like PCs, PDAs and mobile phones. (In the following specification, the term "AV" stands for "audio/video") To build up a network, all these devices can be interconnected via various media, like i.LINK, Ethernet, wireless, etc.

So far, a lot of effort has been made to develop Home Network middlewares that implement the basic functions of Home Network device control and computing. Examples are AV/C (Audio/Video Control), Jini, HAVi (Home Audio/Video interoperability), or UPnP (Unified Plug'n Play), wherein UPnP, AV/C, and HAVi provide a device-specific control.

AV/C (Audio/Video Control) is a common middleware standard for AV devices. The messages and instructions of the AV/C protocol are close to the machine level.

UPnP (Unified Plug'n Play) is a middleware standard for providing networking functionality to AV devices. Interfaces of AV devices are defined, and besides that, a low-level AV device management is possible.

HAVi (Home Audio/Video interoperability) is another middleware standard for accessing AV devices and for providing networking functionality. Different types of AV devices, the interface definitions of said AV devices and methods for handling said AV devices are specified.

Middleware provides APIs to access home network device's functionality and to control the exchange of contents data (e.g. content streaming). As mentioned above, these APIs are fine-grained and focused on devices.

Controlling AV devices within a home network and programming said devices is therefore a rather cumbersome task, because there are so many different middleware standards. In order to set up a data stream between AV devices that support different middleware standards, two different instruction sets have to be utilised.

In the European Patent Application 01 128 163 "Method for serving User Requests with respect to a Network of Devices", which has been filed by the applicant of the present application, it is described how a sequence of actions corresponding to a certain well-defined service can be generated.

A second approach is described in European Patent Application EP-A-02 007 765.7 "Management and control of networked audio-video devices", which has also been filed by the applicant of the present invention. According to this method, the task of mapping a user input to a sequence of middleware instructions is fulfilled by an instance of a functionality module, which is generated for this task only. The instance of said functionality module encapsulates the realization of a certain well-defined service and realizes this service autonomously. The lifetime of said instance is closely related to said task: As soon as the task is fulfilled, the lifetime of the respective instance is terminated.

The International Application WO-A-02/05118 "Method and System for Controlling and Coordinating Devices and Appliances, such as from a Central Portal and via a Wide Area Communications Network" describes a central portal for coordinating and controlling devices at client sites based on, for example, predetermined times, or requests by users or service providers. The central portal includes one or more server computers that receive an event associated with a client site. The central portal identifies the client site from the received event and retrieves a record or other data associated with a client site. The central portal provides a command sequence based on the received event and the retrieved record, and provides, over a network, an executable command sequence to a device residing at the client site to control the device at the client site. The central portal resolves any conflicts and performs any necessary data transformations.

In the article " From proven office technologies to the intelligent multimedia home" by C. Gran et al., Multimedia and Expo, 2000, ICME 2000, 2000 IEEE International Conference on New York, NY, USA 30 July - 2 Aug. 2000, Piscata-way, NJ, USA, IEEE, US, 30 July 2000, pages 1225-1228, internet services and network technologies that provide high bandwidth for audio/visual services in future home environments are discussed. In particular, the standards HAVi, Jini and Home API are introduced and compared, in order to find out whether they can be used as a base for a common home networking architecture.

According to the International Application WO-A-01/91434 "Service Management in Home Environment", an intelligent information gateway is arranged to establish communication with the home network to communicate said services to and from, as well as within, the home network for creation of a platform for, to and from, and within, the home network communicating services. At a procedure to, at such a communication system, make possible for users to manage and utilize services, accessible over public network, in a home network with at least one user terminal, a services broker or service provider is contacted by the user via said information gateway.

In US Patent Application US 2001/0032273 Al, "Architecture of a Bridge between a Non-IP Network and the Web", thin glue layers are described, whereby said thin glue layers bridge a Non-IP network and the Internet Web. Existing services in both networks are used directly wherever feasible, thereby achieving simplicity and efficiency. A Non-IP-specific application can use a Non-IP API to access internet services, and an IP-based Internet browser can use commands encoded in HTTP, XML, Java, or proprietary formats to access Non-IP services and to control Non-IP devices. The glue layers translate between the IP protocol and Non-IP API, but also allow commands and responses to tunnel between end applications in the Internet and the Non-IP network without interpretation.

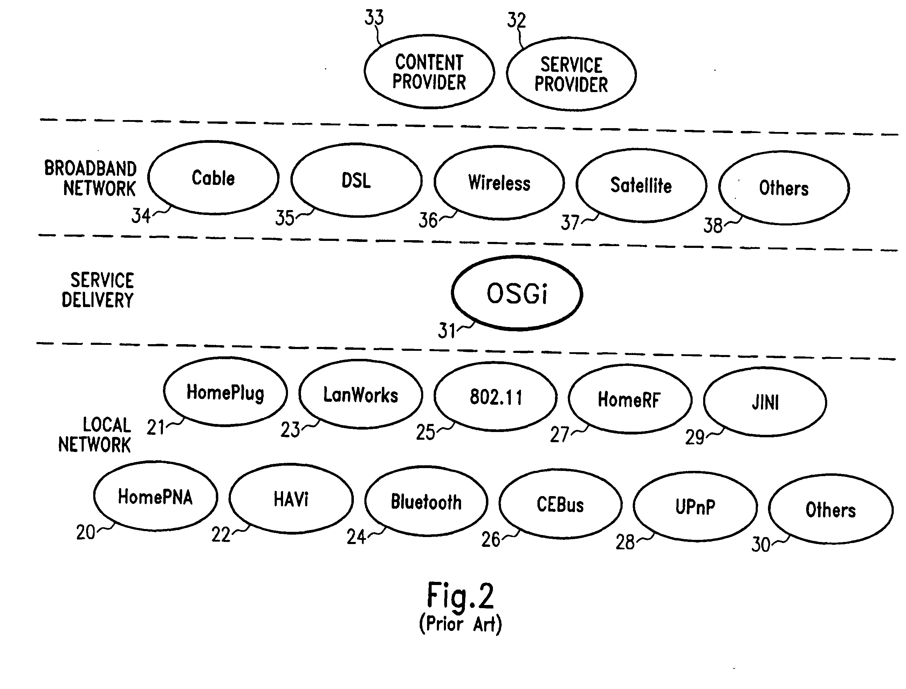

The article "Java in the Home: OSGI Residential Gateways" to D. Jordan, Java Report, SIGS Publications, New York, NY, US, vol. 5, no. 9, September 2000, pages 38-42, comprises a description of the OSGi Service Framework, and in particular of the OSGi framework object model. In Fig. 2 of the article, the life cycle of an OSGi bundle is depicted. It is an object of the invention to provide a set of AV services and a method for controlling devices of a local device network, whereby the control of AV devices is simplified, and whereby a remote control of said AV devices is supported.

The object of the invention is solved by a gateway according to claim 1, and by a method for controlling devices of a local device network according to claim 16. Preferred embodiments thereof are respectively defined in the respective following subclaims. A computer program product according to the present invention is defined in claim 20 and a computer readable record medium according to the present invention is defined in claim 21.

According to the invention, the AV bundle for a service gateway framework, in particular for a service gateway framework according to the OSGi standard, comprises a set of AV services, which are provided at local access points or, via broadband networks, at remote access points. Said AV services control devices of a local device network. Starting from device-independent AV commands, said AV services generate instructions of a middleware protocol required for controlling said devices in accordance with said device-independent AV commands.

Service gateway frameworks such as OSGi (Open Services Gateway Initiative) provide a platform for downloading service applications that obey to standards defined by OSGi. Said services do comprise applications for home networks, but they do not comprise services for handling AV devices yet.

According to the invention, an AV bundle comprising various AV services is integrated into a service gateway framework such as OSGi. By doing this, it is possible to access and program the AV devices of the home network via the internet, or via another broadband network. A remote control of said AV devices becomes possible.

Another advantage is that one unified platform, particularly OSGi, can be used for accessing a variety of different services, whereby said AV services are only one service offer among other service offers. A common unified service platform allows to combine and interconnect different service offers, and the benefit for the client is improved. E.g., it is possible to access both the AV devices and the non-AV devices of a home network via OSGi. A unified remote control of all the electrical and electronic devices in a home becomes possible. Audio and video devices such as TVs, tuners, video recorders can be programmed, via the internet and the OSGi platform, from any remote access point, e.g. from a hotel room.

When the AV bundle according to the invention is used, it is not necessary to address the AV devices of a Home Network with complicated middleware instructions. The AV services according to the invention can be accessed with device-independent, simple commands, and therefore, the access to the AV devices is simplified both for users and for application programmers.

Middleware protocols such as AV/C, HAVi, which are rather fine-grained and cumbersome, are hidden both from the user and from the application programmer. Instructions of a very basic level are replaced by higher level device-independent commands. Thus, a more appropriate level of abstraction is provided.

Due to the variety of existing middleware standards, it is likely that within one home network, different middleware standards have to be used. When a audio/video stream has to be directed from a AV device with a first middleware standard to a AV device with a second middleware standard, the programming gets difficult. According to the invention, the AV commands that are provided to the AV services are always the same, and the respective AV service is responsible for mapping said AV commands to the right middleware protocol.

Therefore, the introduction of an AV bundle comprising a set of AV services allows to set up the interactions between different AV devices in a simplified and intuitive way.

According to a preferred embodiment of the invention, said AV services generate instances of one or more functionality modules, whereby said functionality modules encapsulate the realization of certain well-defined tasks corresponding to said device-independent AV commands, and whereby said instances generate said instructions of said middleware protocol for controlling said AV devices according to said device-independent AV commands. After a certain task is fulfilled and a sequence of middleware instructions has been generated, the instance can be removed. Therefore, there are less objects active at a time. Furthermore, by using this flexible approach of generating instances of said functionality modules when and where required, an efficient work load balancing can be implemented. Furthermore, the type of instance to be generated can be chosen in dependence of the middleware protocol required by the AV device. To which an access is directed.

Preferably, said instances of a functionality module step through a life cycle, whereby said life cycle comprises the creation of said instance, a service operation, and the termination of said instance. Said instances exist only as long as they are needed. Furthermore, a one-to-one correspondence between a device-independent AV command and an instance of a functionality module may be established.

Preferably, said AV services comprise interfaces defining the routines and parameters of the respective AV service. Further preferably, said AV services are implemented as JAVA classes. JAVA provides the encapsulation features required for implementing the invention.

Preferably, said AV services control the exchange of data streams between said devices or between said devices and said broadband networks.

According to a preferred embodiment of the invention, said AV bundle comprises an AV service that provides those AV tracks that are stored at any device of said local device network. This allows to establish an archive functionality where all the AV tracks within a home network are registered and can be searched.

Preferably, said AV bundle comprises an AV service that provides those AV devices that are connected to said local device network.

Preferably, said AV bundle comprises an AV service that provides those broadcast services that are available within said local device network. Said broadcast service can be any received AV stream such as TV channels, radio stations, AV data streams from a broadband network, etc.

Further preferably, said AV bundle comprises an AV service that provides those broadcast service events that are available or will be available within said local device network. By means of this AV service, an Electronic Program Guide (EPG) can be realized, which informs the user about different broadcasts. Furthermore, the user can use advanced query tools for identifying the broadcasts he or she is interested in. Furthermore, the programming of recording devices is simplified.

According to a preferred embodiment of the invention, said AV bundle comprises a recording service that can be programmed to record a certain broadcast service event. Instead of programming a start time and an end time of a broadcast service event, content information is used for programming the recording devices.

Preferably, said recording service generates a new AV track by recording a scheduled broadcast service event. Said new AV track is named according to the broadcast service event and is put into the archive.

Preferably, said middleware protocols comprise at least one of the protocols HAVi, AV/C, UPnP.

Further preferably, said middleware protocols comprise at least one of the protocols Bluetooth, CAL, CEBus, Convergence, emNET, HomePNA, HomePlug, HomeRF, Jini, LonWorks, 802.11B and VESA. AV contents are not only processed by AV devices. Personal computer, organisers, mobile phones and other IT devices can store and process AV contents as well.

According to the invention, a service gateway framework, particularly a service gateway framework according to the OSGi standard, comprises a set of services, which are provided at local access points or, via broadband networks, at remote access points. The service gateway device is characterized by an AV bundle according to any of the embodiments described above. The concept of a service gateway framework which brings together service providers and clients is strengthened by including AV services.

Preferably, said service gateway framework manages at least one of installation, versioning, configuration, deinstallation of said AV services. When new types of AV devices appear, corresponding AV services can be downloaded by the service gateway architecture. The service gateway framework keeps track of different versions.

Preferably, said AV services are accessed by local applications or, via broadband networks, by remote applications, whereby said local or remote applications forward device-independent AV commands to the respective AV services. The client doesn't have to be aware of the detailed specifications of his home network when issuing the respective commands.

Further preferably, said broadband networks comprise at least one of DSL, cable, wireless networks, or satellite. The service gateway architecture co-operates with all kinds of broadband networks.

According to the inventive method, devices of a local device network are controlled, whereby said local device network is connected to a service gateway framework, in particular to a service gateway framework according to the OSGi standard. Said service gateway framework provides a set of services. The inventive method is characterized by a step of forwarding device-independent AV commands to an AV bundle comprising a set of AV services, whereby said AV bundle is a part of said service gateway framework. Then, on part of said AV services, instructions of a middleware protocol required for controlling said AV devices in accordance with said device-independent AV commands are generated.

Further objects, features and advantages of the AV bundle according to the present invention will become apparent from the following description of an exemplary embodiment thereof taken in conjunction with the accompanying drawings, wherein
- **Fig. 1**: gives an overview of a service gateway framework according to the OSGi standard;
- **Fig. 2**: shows the various protocols used within the local network and within the wide area network;
- **Fig. 3**: shows how the OSGi framework, the AV services and the middleware co-operate; and
- **Fig. 4**: shows a user interface of a home network application including an electronic program guide (EPG) and a record button.

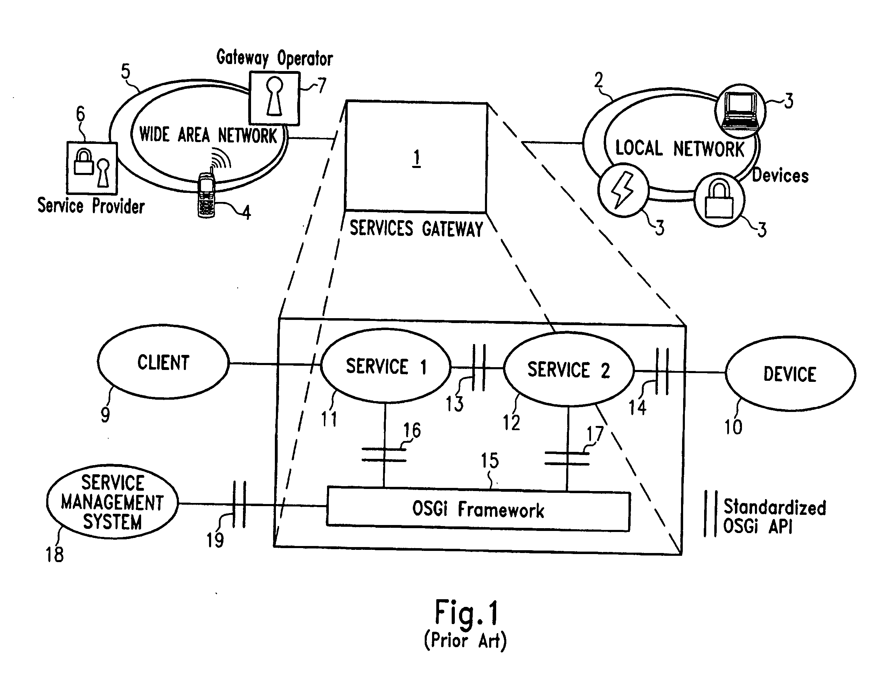

In Fig. 1, it is shown how a services gateway 1 according to OSGi can provide a multitude of different services to a client. Some of these services relate to a local network 2 that is connected to the services gateway 1. Within the local network 2, which is typically some kind of a home network, several devices 3 exchange commands and messages. For this purpose, a local protocol is used within the local network 2.

The client 4 can access the services of the services gateway 1 via a wide area network 5, which can be the internet or the telecommunications infrastructure. The services accessed by the client 4 might e. g. include services for remotely controlling, e.g. via the internet, lighting, heating and ventilation devices that are connected to the home network. From any internet access point, the client 4 can log in, access the homepage of the services gateway, and control the devices 3 of the local network 2.

The client 4 may only use those services he or she is registered for. When the client 4 has registered for a certain service at the service provider 6, the software modules for implementing a certain service can be downloaded from the service provider 6 to the services gateway 1. Also new versions and updates of the respective service modules can be obtained from the service provider 6. The gateway operator 7 offers a service gateway access via any broadband networking technology. E.g. the gateway operator might be an internet provider offering websites for service gateway access.

In the lower part of Fig. 1, a magnified view 8 of the services gateway 1 is shown. Let us assume that a client 9 wants to control a device 10 of the corresponding home network, for example to adjust the heater's target temperature. The client 9 accesses a first service 11. The OSGi specifications delineate Application programming Interface (API) standards for a gateway platform execution environment. Service gateways must support these API standards in order to conform to the OSGi specification. In case said first service 11 has to exchange messages with a second service 12, this exchange of messages takes place via a standardized OSGi API 13. Also the exchange of messages and commands between the second service 12 and the device 10 takes place via a standardized OSGi API 14.

The services 11, 12 are part of an OSGi framework 15 that comprises a multitude of other services. Between said first service 11, said second service 12 and the OSGi framework 15, messages are exchanged via standardized APIs 16, 17. The OSGi framework 15 is connected to a service management system 18. Said service management system 18 is responsible for installation, configuration, updating and deinstallation of the OSGi framework's services. Communication between the service management system 18 and the OSGi framework 15 takes place via a OSGi API 19.

Fig. 2 gives an overview of the various networking technologies that can be used together with a OSGi service gateway architecture. The OSGi specification is designed to compliment and enhance virtually all residential networking standards and initiatives. On part of the respective local network, networking standards such as HomePNA (20), HomePlug (21), HAVi (22), LonWorks (23), Bluetooth (24), 802.11 (25), CEBus (26), HomeRF (27), UPnP (28), JINI technology (29), and others (30) such as CAL, Convergence, emNET and VESA can co-operate with the OSGi framework 31.

The services that can be accessed via the OSGi framework are offered by respective service providers 32 and by content providers 33. Services and contents are provided via a broadband networking technology to the OSGi framework 31. In Fig. 2, several examples of broadband networking technologies such as cable (34), DSL (35), wireless networks (36), satellite (37), and others (38) are given. Via these networking technologies, managed broadband services can be delivered to local networks in homes, cars and other environments.

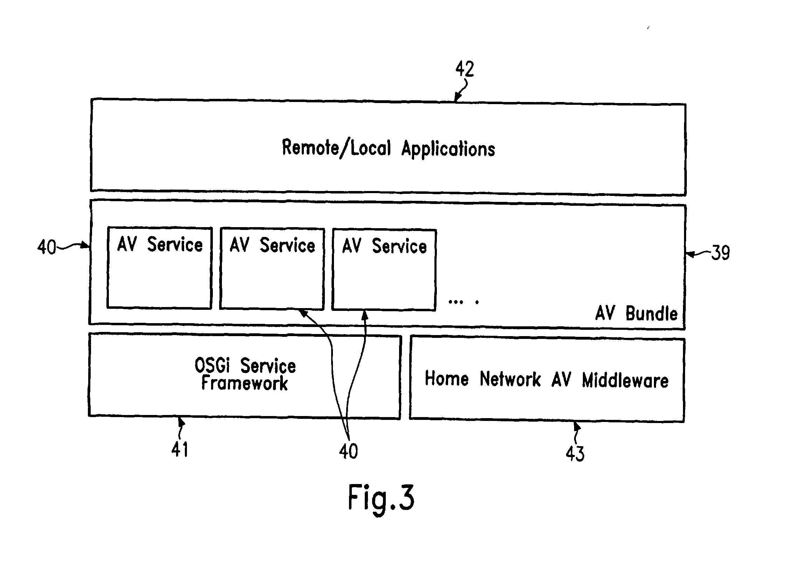

According to the invention, an AV bundle comprising a set of AV services is integrated into a service gateway framework, and in particular into a service gateway framework according to the OSGi standard. So far, an AV functionality has not been included within the OSGi framework. In Fig. 3, it is shown how the AV bundle 39, which comprises a multitude of AV services 40, can be integrated into the OSGi service framework 41. Whenever the local or remote applications 42 issue an AV command to the AV bundle 39, said AV command is processed by a respective AV service 40. The AV services 40 are responsible for mapping the device-independent AV commands to a corresponding sequence of instructions of the respective middleware 43. Middleware provides APIs to access home network device's functionality and to control the exchange of contents data (e.g. content streaming). These middleware APIs are rather fine-grained and focused on the respective AV device. Each of the common middleware protocols for AV applications requires a different sequence of instructions. By providing a "bundle" of frequently requested AV services on a more abstract, device-independent level, it becomes a lot easier for remote and local applications 42 to access the AV devices.

The task of generating the rather complicated instruction sequences of the so-called middleware 43 is shifted to said AV services 40. On part of the AV services 40, the structure of the Home Network and the respective types of AV devices are known. Additionally, the more abstract AV commands from the local and remote applications 42 are known on part of the AV services 40.

Basically, there are two possible solutions how said middleware instructions can be generated. The first solution is described in European Patent Application 01 128 163 "Method for serving User Requests with respect to a Network of Devices", which has been filed by the applicant of the present application. In this application, it is described how a sequence of actions corresponding to a certain well-defined service can be generated.

A second approach is described in European Patent Application EP-A-02 007 765.7 "Management and control of networked audio-video devices", which has also been filed by the applicant of the present invention. According to this method, the task of mapping a user input to a sequence of middleware instructions is fulfilled by an instance of a functionality module, which is generated for this task only. The instance of said functionality module encapsulates the realization of a certain well-defined service and realizes this service autonomously. The lifetime of said instance is closely related to said task: As soon as the task is fulfilled, the lifetime of the respective instance is terminated.

In the following, some of the AV services of the AV bundle according to the invention will be explained in more detail.

***ArchiveService*** is an AV service that provides a list of all stored AV tracks, together with the status of the respective AV track. ***ArchiveService*** searches for all AV devices that can store content (tape-based recorders, disc-based devices) and asks them for their contents. In case a track is deleted, in case a certain device is removed from the network, or in case a new track is recorded, ***ArchiveService*** is notified and changes the list of stored track names accordingly. In case the status of a track is changed, the service ***ArchiveService*** receives a notification and changes the track list accordingly. Whenever any modification to the track list has been made, ***ArchiveService*** sends an event to all registered listeners in order to inform them about the change.

The method trackList returns the archive, which is a list of the stored track-names and their status. The method eraseTrack erases a track from the archive.

AV devices within the local network can be registered as ArchiveServiceListeners. As soon as a certain device is registered as an ArchiveServiceListener, it will be called whenever the status for a track changes or whenever a track will be deleted or a new track will be recorded. In order to register, the method registerArchiveServiceListener can be called. Correspondingly, there exists a method unregisterArchiveServiceListener.

In addition to the service ***ArchiveService**,* a corresponding service ***ArchiveServiceListener*** is defined. Within ***ArchiveServiceListener**,* the methods archiveChanged and stateChanged exist. The method archiveChanged will be called whenever a track is deleted or a new track will be recorded. The method stateChanged will be called whenever a state for a track changes.

Another AV service is ***DeviceListService**,* which maintains a list of the devices that are connected to the local network, together with their status. In case a device will be removed from the network, or in case a device changes its status, ***DeviceListService*** will receive a notification. Whenever the list of devices is changed, ***DeviceListService*** sends an event to all registered DeviceListServiceListeners.

***DeviceListService*** comprises a method deviceList, which returns the list of connected devices, or null if an error occurs. Furthermore, a method registerDeviceListServiceListener for registering a listener is defined. Correspondingly, there is a method called unregisterDeviceListServiceListener.

In addition to the AV service ***DeviceListService**,* a corresponding AV service ***DeviceListServiceListener*** is defined. This service provides the method deviceListChanged, which will be called whenever the device list changes. Whenever a new device is connected to the local network, the method deviceListChanged will be called.

***ServiceListService*** is an AV service that maintains a list of available broadcast services, characterised by their names, and the status of each broadcast service. A "Broadcast services" may for example be a radio or TV station, e. g. "NBC". The term "broadcast service" also comprises AV data streams received via the internet or via another broadband network. The complete list of available broadcast services within the Home Network is obtained by calling the method serviceList. In case the Home Network comprises several tuners that receive the same program, the list of broadcast services returned by the method serviceList contains the name of said program only once, because duplicates are automatically removed.

Whenever the list of broadcast services is changed, ***ServiceListService*** sends an event to all registered ServiceListServiceListeners. ***ServiceListService*** comprises a method registerServiceListServiceListener that allows to register a new listener. Said listener will be notified whenever the list of broadcast services changes. Furthermore, ***ServiceListService*** comprises a method unregisterServiceListServiceListener.

***ServiceListServiceListener*** is the AV service that corresponds to ***ServiceListService*** on part of the listener. ***ServiceListServiceListener*** comprises a method serviceListChanged, and said method is called whenever the list of broadcast services changes.

For each broadcast service, so-called "service events" are defined, which characterise a certain broadcast, e.g. a game show, a certain movie, etc. Said service events are tracked by the AV service ***ServiceEventListService.*** On part of ***ServiceEventListService,*** it is known whether a service is selected and if a recording is going on.

***ServiceEventListService*** comprises a method currentEvent, which returns the current event for a certain broadcast service or null if an error occurs. Similarly, the method nextEvent returns the next event for a certain broadcast service. By means of the method ServiceEventList, the current and next events for all the available broadcast services can be obtained. The method todayServiceEventList returns the events of the current day for a given broadcast service or null if an error occurs.

***ServiceEventListService*** permits to notify registered listeners whenever the content of the list of broadcast service events changes. For this purpose, ***ServiceEventListService*** comprises the method registerServiceEventListServiceListener, and the corresponding method unregisterServiceEventListServiceListener. Besides that, there is a corresponding AV service called ***ServiceEventListServiceListener,*** in which the method serviceEventListChanged is defined.

The most important AV service of the AV bundle according to the invention is ***RecordingService.*** By means of the AV service ***RecordingService***, it is possible to record a specified broadcast service from its start time to its end time, whereby details concerning the control of the respectively involved AV devices are hidden from the user. The user only has to call the method schedule and specify the broadcast service and the broadcast service event that he wants to record, e.g. a certain movie. After calling schedule, ***RecordingService*** starts fulfilling its objective and runs through a corresponding sequence of operations. First, the record service waits until the start time is reached. If it is already reached or even elapsed, recording is started immediately. Then, ***RecordingService*** looks for a tuner that provides the specified broadcast service. Next, it looks for a suitable recording device, which can be a hard disc, a tape recorder or another kind of storage medium. The streams between the involved AV devices are set up, and on part of the tuner, the broadcast service is selected. Then, the recording is started on the recording device and the new track that has been created is named to event_name. Until the end time is reached, ***RecordingService*** observes the involved devices. Then, the recording device is stopped, and finally, the devices are disconnected. The new track that is generated during the recording is forwarded to ***ArchiveService.***

Furthermore, ***RecordingService*** comprises a method state, which returns the current status for a certain schedule. Each schedule can be identified by means of a unique ID. By calling the method cancel, it is possible to stop a recording before the end time is reached. The track that has been created for the recording will be deleted, though. By calling the method stop before the end time is reached, the user can keep the AV track that has been generated so far during the recording.

Again, it is possible to register and unregister a listener. In case of any schedule changes, ***RecordingService*** notifies all the registered listeners.

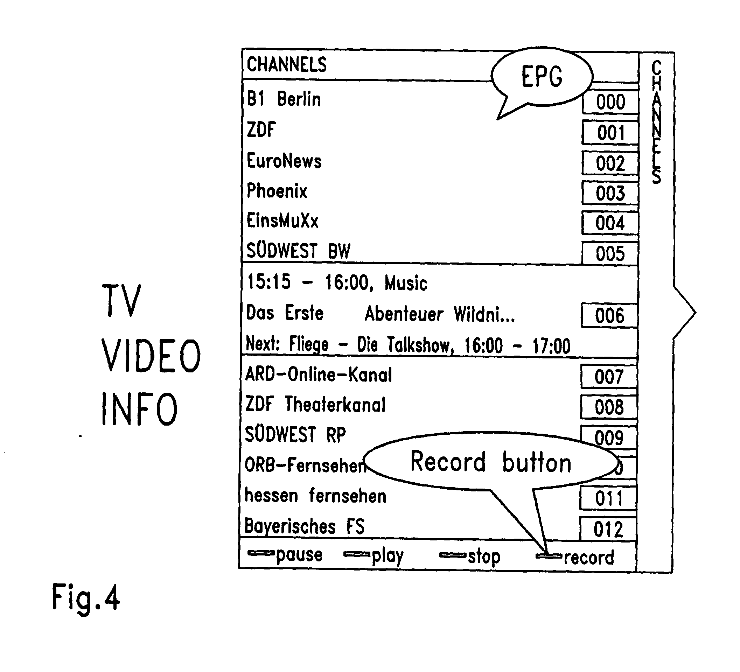

The interplay between the AV service ***RecordingService*** and the AV service ***ServiceEventListService*** is an important aspect of the AV bundle according to the invention. If the user wants to record a broadcast service event, all he or she has to do is to specify the name of the broadcast service event. ***ServiceEventListService*** will provide the respective start time and end time of the broadcast service event to ***RecordingService.*** It is also possible to implement an Electronic Program Guide (EPG) as shown in Fig. 4. By clicking on the record button, it is possible to record a selected broadcast service event. Especially for a remote control of AV devices, e.g. via the internet, it is advantageous to use an Electronic Program Guide.

## Claims

1. Gateway for controlling devices of a local device network, said gateway comprising means for providing services of a service gateway framework (41) according to the Open Services Gateway initiative,
and
- means adapted for forwarding device-independent audio/video commands to an audio/video bundle (39) comprising a set of audio/video services (40), with said audio/video bundle (39) being a part of said service gateway framework (41), whereby said audio/video services control the exchange of data streams between said devices or between said devices and broadband networks; **characterised in that**
- means it further comprises adapted for generating, on part of said audio/video services (40), instructions of a middleware protocol (43) required for providing those audio/video tracks that are stored at any device of said local device network.

2. Gateway according to claim 1, **characterized in that** said audio/video services are adapted for generating instances of one or more functionality modules, whereby said functionality modules encapsulate the realization of certain well-defined tasks corresponding to said device-independent audio/video commands, and whereby said instances are adapted for generating said instructions of said middleware protocol for controlling said audio/video devices according to said device-independent audio/video commands.

3. Gateway according to claim 2, **characterized in that** said instances of a functionality module are adapted for stepping through a life cycle, whereby said life cycle comprises the creation of said instance, a service operation, and the termination of said instance.

4. Gateway according to any of claims 1 to 3, **characterized in that** said audio/video services comprise interfaces defining the routines and parameters of the respective audio/video service.

5. Gateway according to any of claims 1 to 4, **characterized in that** said audio/video services are implemented as JAVA classes.

6. Gateway according to any of claims 1 to 5, **characterized in that** said audio/video bundle comprises an audio/video service that provides those audio/video devices that are connected to said local device network.

7. Gateway according to any of claims 1 to 6, **characterized in that** said audio/video bundle comprises an audio/video service that provides those broadcast services that are available within said local device network.

8. Gateway according to any of claims 1 to 7, **characterized in that** said audio/video bundle comprises an audio/video service that provides those broadcast service events that are available or will be available within said local device network.

9. Gateway according to any of claims 1 to 8, **characterized in that** said audio/video bundle comprises a recording service that can be programmed to record a certain broadcast service event.

10. Gateway according to claim 9, **characterized in that** said recording service is adapted for generating a new audio/video track by recording a scheduled broadcast service event.

11. Gateway according to any of claims 1 to 10, **characterized in that** said middleware protocols comprise at least one of the protocols HAVi, AV/C, UPnP.

12. Gateway according to any of claims 1 to 11, **characterized in that** said middleware protocols comprise at least one of the protocols Bluetooth, CAL, CEBus, Convergence, emNET, HomePNA, HomePlug, HomeRF, Jini, LonWorks, 802.11B and VESA.

13. Gateway according to any of claims 1 to 12, **characterized in that** said service gateway framework is adapted for managing at least one of installation, versioning, configuration, deinstallation of said audio/video services.

14. Gateway according to any of claims 1 to 13, **characterized in that** said audio/video services are adapted for being accessed by local applications or, via broadband networks, by remote applications, whereby said local or remote applications may forward device-independent audio/video commands to the respective audio/video services.

15. Gateway according to any of claims 1 to 14, **characterized in that** said broadband networks comprise at least one of DSL, cable, wireless networks, or satellite.

16. Method for controlling devices of a local device network, said local device network being connected to a service gateway framework (41) according to the Open Services Gateway Initiative, with said service gateway framework providing a set of services, comprising the following steps:
- forwarding device-independent audio/video commands to an audio/video bundle (39) comprising a set of audio/video services (40), with said audio/video bundle (39) being a part of said service gateway framework (41), whereby said audio/video services control the exchange of data streams between said devices or between said devices and broadband networks; **characterised in that** it further comprises the step of generating, on part of said audio/video services (40), instructions of a middleware protocol (43) required for providing those audio/video tracks that are stored at any device of said local device network.

17. Method for controlling devices of a local device network according to claim 16, **characterized by** generating instances of one or more functionality modules, whereby said functionality modules encapsulate the realization of certain well-defined tasks corresponding to said device-independent audio/video commands, and whereby said instances generate said instructions of said middleware protocol for controlling said audio/video devices according to said device-independent audio/video commands.

18. Method for controlling devices of a local device network according to claim 16 or claim 17, **characterized by** generating an instance of a functionality module, starting and terminating the operation of said instance, and removing the instance of said functionality module.

19. Method for controlling devices of a local device network according to any of claims 16 to 18, **characterized by** accessing said audio/video services by local applications or, via broadband networks, by remote applications, whereby said local or remote applications forward device-independent audio/video commands to the respective audio/video services.

20. Computer program product, comprising computer program means adapted to perform the method steps as defined in anyone of claims 16 to 19 when being executed on a computer, digital signal processor or the like.

21. Computer readable record medium, storing thereon a computer program product according to claim 20.

## Patentansprüche

1. Gateway zum Steuern von Geräten eines lokalen Gerätenetzes, das Vorrichtungen zum Bereitstellen von Services eines Service-Gateway-Frameworks (41) entsprechend der Open Services Gateway Initiative aufweist, und mit
- Vorrichtungen zum Weiterleiten geräteunabhängiger Audio/Video-Kommandos an ein Audio/Video-Bündel (39) bestehend aus einer Reihe von Audio/Video-Services (40), wobei das Audio/Video-Bündel (39) Teil des Service-Gateway-Frameworks (41) ist und die Audio/Video-Services den Austausch von Datenströmen zwischen den Geräten oder zwischen den Geräten und Breitbandnetzen steuern;
**dadurch** charakterisiert, dass dieses zusätzlich Vorrichtungen seitens der Audio/Video-Services (40) zum Erzeugen von Instruktionen eines Middleware-Protokolls (43) aufweist, die zum Bereitstellen derjenigen Audio/Video-Titel erforderlich sind, die in einem beliebigen Gerät des lokalen Gerätenetzes gespeichert sind.

2. Gateway nach Anspruch 1, **gekennzeichnet durch** die Audio/Video-Services, die zum Erzeugen von Vorgängen in einem oder mehreren funktionellen Modulen geeignet sind, wobei die funktionellen Module die Realisierung von bestimmten definierten Aufgaben entsprechend der geräteunabhängigen Audio/Video-Kommandos einschließen und wobei die Vorgänge zum Erzeugen der Instruktionen des Middleware-Protokolls zum Steuern der Audio/Video-Geräte gemäß den geräteunabhängigen Audio/Video-Kommandos geeignet sind.

3. Gateway nach Anspruch 1, **dadurch gekennzeichnet, dass** die Vorgänge eines funktionellen Moduls einen Lebenszyklus durchlaufen, wobei der Lebenszyklus das Erzeugen des Vorgangs, einen Servicebetrieb und das Beenden des Vorgangs einschließt.

4. Gateway nach einem der Ansprüche 1 bis 3, **dadurch gekennzeichnet, dass** die Audio/Video-Services Schnittstellen aufweisen, die die Routinen und Parameter des entsprechenden Audio/Video-Service definieren.

5. Gateway nach einem der Ansprüche 1 bis 4, **dadurch gekennzeichnet, dass** die Audio/Video-Services als JAVA Klassen implementiert sind.

6. Gateway nach einem der Ansprüche 1 bis 5, **dadurch gekennzeichnet, dass** das Audio/Video-Bündel einen Audio/Video-Service aufweist, der diejenigen Audio/Video-Geräte versorgt, die an das lokale Gerätenetz angeschlossen sind.

7. Gateway nach einem der Ansprüche 1 bis 6, **dadurch gekennzeichnet, dass** das Audio/Video-Bündel einen Audio/Video-Service aufweist, der diejenigen Übertragungsservices bereitstellt, die innerhalb des lokalen Gerätenetzes verfügbar sind.

8. Gateway nach einem der Ansprüche 1 bis 7, **dadurch gekennzeichnet, dass** das Audio/Video-Bündel einen Audio/Video-Service aufweist, der diejenigen Übertragungsservice-Ereignisse bereitstellt, die innerhalb des lokalen Gerätenetzes verfügbar sind oder verfügbar werden.

9. Gateway nach einem der Ansprüche 1 bis 8, **dadurch gekennzeichnet, dass** das Audio/Video-Bündel einen Aufzeichnungsservice aufweist, der zum Aufzeichnen eines bestimmten Übertragungsservice-Ereignisses programmiert werden kann.

10. Gateway nach Anspruch 9, **gekennzeichnet durch** einen Aufzeichnungsservice zum Erzeugen eines neuen Audio/Video-Titels **durch** Aufzeichnen eines planmäßigen Übertragungsservice-Ereignisses.

11. Gateway nach einem der Ansprüche 1 bis 10, **dadurch gekennzeichnet, dass** die Middleware-Protokolle wenigstens eines der Protokolle HAVi, AV/C, UPnP aufweisen.

12. Gateway nach einem der Ansprüche 1 bis 11, **dadurch gekennzeichnet, dass** die Middleware-Protokolle wenigstens eines der Protokolle Bluetooth, CAL, CEBus, Convergence, emNET, HomePNA, HomePlug, HomeRF, Jini, LonWorks, 802.11B und VESA aufweisen.

13. Gateway nach einem der Ansprüche 1 bis 12, **dadurch gekennzeichnet, dass** das Service-Gateway-Framework zum Handhaben wenigstens eines Elements der Gruppe aus Installation, Versionierung, Konfiguration, Deinstallation der Audio/Video Services geeignet ist.

14. Gateway nach einem der Ansprüche 1 bis 13, **dadurch gekennzeichnet, dass** die Audio/Video-Services über lokale Anwendungen oder über Breitbandnetze mittels Fern-Anwendungen zugängig sind, wobei die lokalen oder Fern-Anwendungen geräteunabhängige Audio/Video-Kommandos an die entsprechenden Audio/Video-Services weiterleiten können.

15. Gateway nach einem der Ansprüche 1 bis 14, **dadurch gekennzeichnet, dass** die Breitbandnetze wenigstens ein Element der Gruppe aus DSL, Kabel, drahtlose Netze oder Satellit aufweisen.

16. Verfahren zum Steuern von Geräten eines lokalen Gerätenetzes, wobei das lokale Gerätenetz mit einem Service-Gateway-Framework (41) entsprechend der Open Services Gateway Initiative verbunden ist und das Service-Gateway-Framework eine Reihe von Services mit den folgenden Schritten bereitstellt:
- Weiterleiten von geräteunabhängigen Audio/Video-Kommandos an ein Audio/Video-Bündel (39) mit einer Reihe von Audio/Video-Services (40), wobei das Audio/Video-Bündel (39) ein Teil des Service-Gateway-Frameworks (41) ist und die Audio /Video-Services den Austausch von Datenströmen zwischen den Geräten oder zwischen den Geräten und Breitbandnetzen steuern,
**dadurch** charakterisiert, dass dieses zusätzlich Instruktionen eines Middleware-Protokolls (43) seitens der Audio/Video-Services (40) erzeugt, die zum Bereitstellen derjenigen Audio/Video-Titel erforderlich sind, die in einem beliebigen Gerät des lokalen Gerätenetzes gespeichert sind.

17. Verfahren zum Steuern von Geräten eines lokalen Gerätenetzes nach Anspruch 16, **gekennzeichnet durch** das Erzeugen von Vorgängen in einem oder mehreren funktionellen Module, wobei die funktionellen Module die Realisierung von bestimmten definierten Aufgaben, die den geräteunabhängigen Audio/Video-Kommandos entsprechen, einschließen und wobei die Vorgänge die Instruktionen des Middleware-Protokolls zum Steuern der Audio/Video-Geräte entsprechend den geräteunabhängigen Audio/Video-Kommandos erzeugen.

18. Verfahren zum Steuern von Geräten eines lokalen Gerätenetzes nach Anspruch 16 oder 17, **gekennzeichnet durch** das Erzeugen eines Vorgangs in einem funktionellen Modul. Starten und Beenden der Ausführung des Vorgangs und Entfernen des Vorgangs aus dem funktionellen Modul.

19. Verfahren zum Steuern von Geräten eines lokalen Gerätenetzes nach einem der Ansprüche 16 bis 18, **gekennzeichnet durch** Zugang der Audio/Video-Services über lokale Anwendungen oder über Breitbandnetze **durch** Fern-Anwendungen, wobei die lokalen oder Fern-Anwendungen geräteunabhängige Audio/Video-Kommandos an die entsprechenden Audio/Video-Services weiterleiten.

20. Computerprogrammprodukt mit einer Computerprogrammvorrichtung, die zum Ausführen der Verfahrensschritte nach einem der Ansprüche 16 bis 19 geeignet ist während das Computerprogrammprodukt auf einem Computer, digitalen Signalprozessor oder Desgleichen abläuft.

21. Computerlesbares Aufzeichnungsmedium zum Aufzeichnen eines Computerprogrammprodukts nach Anspruch 20.

## Revendications

1. Passerelle pour commander des dispositifs d'un réseau local de dispositifs, ladite passerelle comprenant des moyens pour fournir des services d'une structure de passerelle de service (41) conformément à l'initiative de passerelle de services ouverte, et
- des moyens adaptés pour transférer des commandes audio/vidéo indépendantes des dispositifs à un faisceau audio/vidéo (39) comprenant un ensemble de services audio/vidéo (40), ledit faisceau audio/vidéo (39) faisant partie d'une structure de passerelle de service (41), ce qui a pour effet que lesdits services audio/vidéo commandent l'échange de flux de données entre lesdits dispositifs du réseau à large bande;
**caractérisée en ce qu'**il comporte en outre
- des moyens adaptés pour générer, dans une partie desdits services audio/vidéo (40), des instructions d'un protocole logiciel standard personnalisé (43) requis pour fournir les pistes audio/vidéo qui sont mémorisées dans n'importe quel dispositif pour ledit réseau local de dispositifs.

2. Passerelle selon la revendication 1, **caractérisée en ce que** lesdits services audio/vidéo sont adaptés pour générer des instances d'un ou de plusieurs modules de fonctionnalité, ce qui a pour effet que lesdits modules de fonctionnalité incorporent la réalisation de certaines tâches bien définies correspondant à des commandes audio/vidéo indépendantes du dispositif, et que de ce fait lesdites instances sont adaptées pour générer lesdites instructions dudit protocole de logiciel standard personnalisé pour la commande desdits dispositifs audio/vidéo conformément auxdites commandes audio/vidéo indépendantes des dispositifs.

3. Passerelle selon la revendication 2, **caractérisée en ce que** lesdites instances d'un module de fonctionnalité sont adaptées pour la progression pas-à-pas dans un cycle de durée de vie, ce qui a pour effet que le cycle de durée de vie comprend la création de ladite instance, l'opération de service et l'achèvement de ladite instance.

4. Passerelle selon l'une quelconque des revendications 1 à 3, **caractérisée en ce que** ledit service audio/vidéo comprend des interfaces définissant les sous-programmes et les paramètres du service audio/vidéo respectif.

5. Passerelle selon l'une quelconque des revendications 1 à 4, **caractérisée en ce que** lesdits services audio/vidéo sont mis en oeuvre en tant que classes JAVA.

6. Passerelle selon l'une quelconque des revendications 1 à 5, **caractérisée en ce que** ledit faisceau audio/vidéo comprend un service audio/vidéo qui alimente les dispositifs audio/vidéo qui sont connectés audit réseau local de dispositifs.

7. Passerelle selon l'une quelconque des revendications 1 à 6, **caractérisée en ce que** ledit faisceau audio/vidéo comprend un service audio/vidéo qui fournit les services de diffusion, qui sont disponibles dans ledit réseau local de dispositifs.

8. Passerelle selon l'une quelconque des revendications 1 à 7, **caractérisée en ce que** ledit faisceau audio/vidéo comprend un service audio/vidéo qui fournit les événements de service vidéo qui sont disponibles ou sont disponibles dans le réseau local des dispositifs.

9. Passerelle selon l'une quelconque des revendications 1 à 8, **caractérisée en ce que** le faisceau audio/vidéo comprend un service d'enregistrement qui peut être programmé pour enregistrer un certain événement de service de diffusion.

10. Passerelle selon la revendication 9, **caractérisée en ce que** ledit service d'enregistrement est adapté pour générer une nouvelle piste audio/vidéo par enregistrement d'un événement de service de diffusion programmé.

11. Passerelle selon l'une quelconque des revendications 1 à 10, **caractérisée en ce que** lesdits protocoles de logiciel personnel standardisé comprennent au moins l'un des protocoles HAVi, AV/C, UPnP.

12. Passerelle selon l'une quelconque des revendications 1 à 11, **caractérisée en ce que** les protocoles de logiciels standards personnalisés comprennent au moins l'un des protocoles Bluetooth, CAL, CEBus, Convergence, emNET, HomePNA, HomePlug, HomeRF, Jini, LonWorks, 802.11B et VESA.

13. Passerelle selon l'une quelconque des revendications 1 à 12, **caractérisée en ce que** ladite structure de passerelle de service est adaptée pour gérer au moins l'un de l'installation, l'établissement d'une version, la configuration, la suppression de l'installation desdits services audio/vidéo.

14. Passerelle selon l'une quelconque des revendications 1 à 13, **caractérisée en ce que** lesdits services audio/vidéo sont adaptés de telle sorte qu'un accès à ces services peut être réalisé par des applications locales ou, par l'intermédiaire de réseaux à large bande, par des applications distantes, ce qui a pour effet que lesdites applications locales ou distantes peuvent transmettre des commandes audio/vidéo indépendantes du dispositif aux services audio/vidéo.

15. Passerelle selon l'une quelconque des revendications 1 à 14, **caractérisé en ce que** lesdits réseaux à large bande comprennent au moins l'un d'un réseau DSL, d'un câble, de réseaux sans fil ou d'un satellite.

16. Procédé pour contrôler des dispositifs d'un réseau local de dispositifs, ledit réseau local de dispositifs étant connecté à une structure de passerelle de service (41) conformément à l'initiative de passerelle de service ouverte, ladite structure de passerelle de services fournissant un ensemble de services, comprenant les étapes suivantes :
- transmettre des commandes audio/vidéo indépendamment des dispositifs à un faisceau audio/ vidéo (39) comprenant un ensemble de services audio/vidéo (40), ledit faisceau audio/vidéo (39) faisant partie d'une structure de passerelle de services (41), ce qui a pour effet que lesdits services audio/vidéo commandent l'échange de flux de données entre lesdits dispositifs du réseau à large bande;
**caractérisé en ce qu'**il comporte en outre l'étape constituant à générer, dans une partie desdits services audio/vidéo (40), des instructions d'un protocole logiciel standard personnalisé (43) requis pour fournir les pistes audio/vidéo qui sont mémorisées dans n'importe quel dispositif pour ledit réseau local de dispositifs.

17. Procédé pour la commande de dispositifs d'un réseau local de dispositifs selon la revendication 16, **caractérisé par** la production d'instances d'un ou de plusieurs modules de fonctionnalité, ce qui a pour effet que lesdits modules de fonctionnalité incorporent la réalisation de certaines tâches bien définies correspondant à des commandes audio/vidéo indépendantes des dispositifs, et que de ce fait lesdites instances sont adaptées pour générer lesdites instructions dudit protocole de logiciel standard personnalisé pour la commande dudit dispositif audio/vidéo conformément auxdites commandes audio/vidéo indépendantes des dispositifs.

18. Procédé de commande de dispositifs d'un réseau local de dispositifs selon la revendication 16 ou la revendication 17, **caractérisé par** la production d'une instance d'un module de fonctionnalité, le démarrage et l'achèvement de l'opération de ladite instance, et le retrait de l'instance dudit module de fonctionnalité.

19. Procédé de commande de dispositifs d'un réseau local de dispositifs selon l'une quelconque des revendications 16 à 18, **caractérisé par** l'accès auxdits services audio/vidéo par des applications locales ou, par l'intermédiaire de réseaux à large bande, par des applications distantes, ce qui a pour effet que lesdites applications locales ou distantes transmettent des commandes audio/vidéo indépendantes des dispositifs aux services audio/vidéo respectifs.

20. Produit de programme informatique comprenant des moyens de programme informatique adaptés pour exécuter les étapes du procédé telles que définies dans l'une quelconque des revendications 16 à 19, lorsqu'elles sont exécutées dans un ordinateur, un processeur de signaux numériques ou analogue.

21. Support d'enregistrement lisible par ordinateur, mémorisant en lui un produit de programme informatique selon la revendication 20.
